# EUROPÄISCHE PATENTSCHRIFT

(11) **EP 2 205 393 B1**
(45) Veröffentlichungstag und Bekanntmachung des Hinweises auf die Patenterteilung: **21.08.2013**
(21) Anmeldenummer: 08802555.6
(22) Anmeldetag: 24.09.2008
(51) Int. Cl.: B23K 26/073

(54) **VORRICHTUNG UND VERFAHREN ZUR LASERBEARBEITUNG**
DEVICE AND METHOD FOR LASER PROCESSING
DISPOSITIF ET PROCÉDÉ D'USINAGE AU LASER

(30) Priorität: 24.09.2007 DE 102007045500; 26.09.2007 DE 102007046074
(43) Veröffentlichungstag der Anmeldung: 14.07.2010
(73) Patentinhaber: Trumpf Laser- und Systemtechnik GmbH, 71254 Ditzingen (DE)
(72) Erfinder: BEA, Martin, 70716 Stuttgart (DE); SCHULZ, Joachim, 70839 Gerlingen (DE); ZEFFERER, Hartmut, 75417 Mühlacker (DE)
(74) Vertreter: DTS München
(86) Internationale Anmeldenummer: PCT/EP2008/008076
(87) Internationale Veröffentlichungsnummer: WO 2009/040103

(56) Entgegenhaltungen:
- EP-A- 0 384 582
- GB-A- 2 337 720
- JP-A- 7 251 284
- US-A- 3 972 599
- ISO: "Lasers and laser-related equipment - Test methods for laser beam widths, divergence angles and beam propagation ratios - Part 1: Stigmatic and simple astigmatic beams" INTERNATIONAL STANDARD, ISO, [Online] Nr. 11146-1, 15. Januar 2005 (2005-01-15), Seiten 1-16, XP008101569 Gefunden im Internet: URL:http://www.iso.org/iso/iso_catalogue/c atalogue_tc/catalogue_detail.ht m?csnumber=33625>

## Beschreibung

Die Erfindung betrifft eine Vorrichtung und ein Verfahren zur Laserbearbeitung, insbesondere zum Laserschweißen. Im speziellen betrifft die Erfindung eine Vorrichtung und ein Verfahren zum CO2-Laserschweißen.

Beim Bearbeiten von Werkstücken mit einem Laserstrahl werden vor allem gaußförmige Laserstrahlen eingesetzt. Dieses Bearbeiten umfasst Schweißen, Schneiden, Schmelzen, Erwärmen, Abtragen, Markieren, thermisches Fügen. Beim Laserschweißen, insbesondere beim CO2-Laserschweißen, wird über einen durch den Laserstrahl definierten Energieeintrag in die zu schweißende Struktur eine Verbindung der zu schweißenden Werkstücke dadurch erzeugt, dass beide Werkstücke in dem durch den Laserstrahl bestrahlten Bereich aufgeschmolzen werden und dann nach dem Zusammenfließen gemeinsam wiedererstarren.

Die GB 2 337 720 beschreibt die Verwendung von geformten Laserstrahlen zur Erhöhung der Arbeitsgeschwindigkeit von Werkzeugen zum Bohren von Microvias in elektronische Leiterplatten.

Die EP 0 384 582 A1 beschreibt ein Bearbeitungsverfahrungen mit Laserenergie, bei dem die Oberfläche eines Materials mit Laserenergie durch die Bewegung eines Laserstrahls über die Oberfläche bearbeitet wird, wobei der Laserstrahl unfokussiert ist und eine Ringmodenkonfiguration mit bevorzugt einem äußeren Ring und einer inneren Füllfläche aufweist, was zum Beispiel durch die Verwendung der Lasermoden TEM₀₀ und TEM₀₁* erreichbar ist.

Durch den fokussierten Laserstrahl wird dabei beim Lasertiefschweißen ein mit Metalldampf gefülltes Keyhole (Kanüle) erzeugt, durch welche der Laserstrahl tief in das Werkstück einzudringen vermag und um welche herum die Schmelze erzeugt wird. Durch dieses schmale Keyhole können Instabilitäten in der Schmelze erzeugt werden, die zu Eruptionen und damit einer suboptimalen Schweißnaht führen.

Ebenso ist es beim Schweißen dünner Bleche durch Wärmeleitungsschweißen als nachteilig empfunden worden, dass gerade bei mit anderen Metallen beschichteten Blechen die erzeugte Schmelze nicht stabil ist und durch Eruption eine verlässliche Schweißnaht verhindert. Daher wird im Stand der Technik beim Schweißen beispielsweise von verzinkten Blechen für die Automobilindustrie, mit Abstandshaltern gearbeitet, die dafür sorgen sollen, dass auftretende Verdampfungen nicht die Schmelze aus der Schweißnaht hinaus blasen. Als Beispiel sei der Einsatz von kleinen Mikrokügelchen genannt, die vor dem Verschweißen zwischen den zu schweißenden Blechen eingebracht werden, um diesen Abstand zu realisieren.

Die Strahlung von CO2-Lasern wird bei senkrechtem Auftreffen auf eine metallische Oberfläche zu annähernd 90% reflektiert. Erst wenn die Strahlung nahezu streifend (Einfallswinkel > 80°) auftrifft, werden wirtschaftlich interessante Einkoppelgrade von - 40% pro Auftreffen des Laserstrahls auf die metallische Oberfläche erzielt.

Aufgabe der vorliegenden Erfindung war es daher, eine Vorrichtung und ein Verfahren zum Bearbeiten von Metallen, insbesondere mit einem CO2-Laser, bereitzustellen, mit denen die Nachteile des Standes der Technik vermieden werden.

Die Aufgabe wird gelöst durch eine Vorrichtung und ein Verfahren nach den unabhängigen Ansprüchen. Vorteilhafte Ausgestaltungen sind in den Unteransprüchen angegeben.

Insbesondere wird die Aufgabe gelöst durch eine Vorrichtung zur Laserbearbeitung umfassend einen Laser (10) mit einem Resonator(11), der eingerichtet ist, einen Laserstrahl (100) mit einer vorbestimmten Kaustik zu erzeugen, ein optisches Element (30) zur Transformation des Laserstrahls (100) in einen Strahl (100') mit ringförmiger Intensitätsverteilung entlang eines Bereichs der Kaustik des Laserstrahls (100'), wobei die ringförmige Intensitätsverteilung im Bereich des kleinsten Durchmessers der Kaustik entlang der Propagationsrichtung des Strahls (100') in einer Ebene senkrecht zur Propagationsrichtung des Strahls (100') einen nach der 2.-Momente-Methode bestimmten Strahlradius (SR) und eine bei einer Intensität von 50% der Maximalintensität in radialer Richtung bestimmte Ringbreite (RB) aufweist und wobei der Quotient (Q) aus der Ringbreite (RB) und dem Strahlradius (SR) kleiner als 0,6, bevorzugt kleiner als 0,5, besonders bevorzugt kleiner als 0,4 ist und das optische Element eine Vortex-Struktur aufweist.

Die Bearbeitung eines Werkstücks mittels eines Laserstrahls umfasst bevorzugt Schweißen, Schneiden, Schmelzen, Erwärmen, Abtragen, Markieren, thermisches Fügen oder eine Kombination hiervon.

Eine Vorrichtung zur Laserbearbeitung, beispielsweise zum Laserschweißen bzw. eine Laserschweißanlage besteht bevorzugt aus dem Laser, einer CNC-gesteuerten mehrachsigen Bewegungseinheit, einem optischen System zur Führung des Laserstrahles innerhalb des Bewegungssystems, einer Bearbeitungs- und Fokussier-Optik und einer Werkstückaufnahmevorrichtung. Bevorzugt bewegt das Bewegungssystem entweder den Laserstrahl über das Werkstück oder das Werkstück unter dem Laserstrahl hindurch. Denkbar sind auch Bauformen, bei denen sowohl das Werkstück als auch der Laserstrahl bewegt werden. Bevorzugt werden auch Scannersysteme zur Bewegung des gebündelten Laserstrahles über das Werkstück verwendet. Scannersysteme bestehen bevorzugt aus einer Kombination von rotierenden Facettenspiegeln und/ oder verkippbaren Ablenkspiegeln, die den Laserstrahl über die einstellbaren Winkel der Spiegel an unterschiedliche Orte reflektieren können. Der Vorteil liegt hauptsächlich in der sehr hohen möglichen Geschwindigkeit der Positionierung des Laserstrahles.

Bevorzugt wird als Laser ein SingleMode-Faserlaser, ein YAG-Laser oder besonders bevorzugt ein CO2-Laser verwendet. Besonders bevorzugt wird ein Laser mit einem Laserstrahl sehr hoher Strahlqualität bei vergleichsweise hoher Laserleistung eingesetzt (z. B. Faserlaser, Scheibenlaser, CO2Slab-Laser o.ä.). Bei der erfindungsgemäßen Vorrichtung wird insbesondere beim Laserschweissen bevorzugt ein CO2-Laser (Wellenlänge ca. 10,6 *µ*m) eingesetzt. Weitere bevorzugt verwendete Strahlquellen insbesondere beim Laserschweißen von Metallen sind der Nd:YAG-Laser (Wellenlänge ca. 1,06 *µ*m). Es werden auch Diodenlaser eingesetzt, insbesondere Halbleiterlaser im Hochleistungsbereich (einige 100 Watt). Vorteilhaft ist hierbei eine wesentliche höhere Konversionseffizienz im Vergleich zu Nd:YAG und CO2-Laser.

Der Strahl des Nd:YAG-Lasers und des Diodenlasers sind fasergängig, d.h. er wird über einen Lichtwellenleiter bzw. Glasfaserkabel in die Laserschweißoptik geführt, die in der Regel aus einem Linsensatz besteht. Der CO2-Strahl hingegen wird durch die Luft geführt und über Spiegel an die Schweißstelle gelenkt und dort entweder mittels Linsen, oder verbreiteter, mittels Fokussierspiegel fokussiert.

Der Laser umfasst in der Regel bevorzugt einen Resonator, durch den der Laserstrahl erzeugt wird. Die Strahleigenschaften eines Laserstrahles werden wesentlich durch die Art des Laser-Resonators bestimmt: die Laseremission wird durch diesen nur in einer Richtung ermöglicht, die durch die Spiegelanordnung und die Geometrie des Aktiven Mediums bestimmt ist. Da Laser dadurch nahezu parallel in eine Richtung verlaufende Strahlung aussenden, kann durch Bündelung (Fokussierung) eine sehr viel höhere Leistungsdichte erreicht werden als bei gewöhnlichen Lichtquellen.

Der Laser erzeugt damit einen Laserstrahl mit vorbestimmten Strahleigenschaften, insbesondere einer entsprechenden Divergenz, einer vorbestimmten Intensiätsverteilung und einer vorbestimmten Kaustik. Kaustik bezeichnet die Geometrie des propagierenden Laserstrahls im Raum und insbesondere die Energieverteilung bzw. Intensitätsverteilung des Laserstrahls in der Ebene senkrecht zur Propagationsrichtung. Die Fokuskaustik bezeichnet diese Struktur entlang der Propagationsrichtung im Bereich des Fokus bei Fokussierung des Laserstrahls.

Entlang der Propagationsrichtung des Laserstrahles ändert sich entsprechend der Divergenz des Laserstrahls der Durchmesser des Laserstrahls - das erreichte Minimum des Laserstrahls wird die Strahltaille genannt. Im Falle der Fokussierung des Laserstrahls wird das Minimum im Fokus erreicht - dieser fällt in der Regel mit der Strahltaille nicht zusammen.

Das Verhalten von Laserstrahlen kann oft gut durch GaußStrahlen beschrieben werden, d.h. der Laserstrahl weist ein Maximum an Intensität im Mittelpunkt auf, das sich in radialer Richtung senkrecht zur Propagationsrichtung des Laserstrahls in seiner Intensität gemäß einer GaußVerteilung abschwächt. Dieser Modus wird als TEM_00 Mode bezeichnet. Es können auch andere Transversalmoden angeregt werden, die ein anderes Profil zeigen; abhängig von der Anzahl ihrer Knotenlinien in horizontale und vertikale Richtung werden sie als TEM_xy Mode bezeichnet. Für diese Moden ist teilweise der Lichtweg durch den Resonator bis zum Ausgangspunkt anders, das heißt, die Resonatorlänge erscheint verändert. Dieses kann zu einer Verfälschung der Longitudinalmodenspektren führen, indem sich die Spektren verschiedener Transversalmoden überlagern.

Über ein optisches Element wird der vom Resonator emittierte Laserstrahl, der in der Regel eine Gauß-förmige Intensitätsverteilung aufweist, in einen Strahl mit einer ringförmigen Intensitätsverteilung transformiert. Ein solches optisches Element kann ein Element sein, über das die Mode des Laserstrahls modifiziert wird, insbesondere die Modenzahl geändert wird und damit ein Laserstrahl mit einer ringförmigen Intensitätsverteilung senkrecht zur Propagationsrichtung erzeugt wird. Es kann sich hierbei um ein optisches Element mit einer Vortex-Struktur handeln.

der Laserstrahl wird durch das optische Element in einen Laserstrahl mit ringförmiger Intensitätsverteilung in der Ebene senkrecht zur Propagationsrichtung transformiert. Hierbei weist der transformierte Laserstrahl bevorzugt eine ringförmige Intensitätsverteilung auf mit einem kreisförmigen Minimum bzw. einer Nullintensität in der Mitte der Ebene senkrecht zur Propagationsrichtung und der Intensitätsverteilung in einem Kreis um den Mittelpunkt mit einem Innendurchmesser di und einem Außendurchmesser da. Im inneren Kreis mit Durchmesser di ist die Intensität damit sehr gering bzw. gleich null, während sich im Ring zwischen di und da eine maximale Intensität ausgebildet hat.

Ein Strahl mit ringförmiger Intensitätsverteilung wird demnach bevorzugt durch zwei Parameter beschrieben: dem Strahldurchmesser bzw. Strahlradius als halber Strahldurchmesser und einer Ringbreite.

Der Strahldurchmesser bzw. der Strahlradius wird bevorzugt über die 2. Momente-Methode bestimmt. Diese Methode ist in der EN ISO 11146-1:2005 beschrieben. Es ist ebenfalls möglich, den Strahlradius so zu definieren, dass dies der Abstand vom Mittelpunkt der ringförmigen Intensitätsverteilung sei, an dem die integrierte Fläche unter der Intensitätskurve einen vorbestimmten Wert erreicht hat, beispielsweise 86 % der Gesamtintensität. Es ist auch denkbar, den Abstand des Maximums der ringförmigen Intensitätsverteilung vom Mittelpunkt aus als Strahlradius zu definieren. Eine ringförmige Intensitätsverteilung liegt bevorzugt auch dann vor, wenn die kreisförmige Leistungsdichteverteilung der maximalen Intensität mit einer Elliptizität von größer als 0,8, bevorzugt größer als 0,87 vorliegt.

Die Ringbreite soll durch die Intensitätsverteilung in der Ebene senkrecht zur Propagationsrichtung definiert werden: die Ringbreite ist die Differenz zwischen einem inneren Radius und einem äusseren Radius, wobei der innere Radius der Radius des Ringes sei, der durch die Intensität der ringförmigen Intensitätsverteilung definiert ist, bei dem vom Mittelpunkt kommend die maximale Intensität zu einem vorbestimmten Bruchteil erstmals erreicht wird, beispielsweise 10 % oder 50 % der maximalen Intensität. Analog sei der äussere Radius der Radius des Kreises der Intensität, bei dem vom Mittelpunkt kommend nach Durchlaufen der maximalen Intensität die Intensität auf denselben Bruchteil gefallen ist. Dementsprechend kann eine 10%-Ringbreite oder eine 50%-Ringbreite definiert werden. So ist dann die 50%-Ringbreite eine bei einer Intensität von 50% der Maximalintensität in radialer Richtung bestimmte Ringbreite und die 10%-Ringbreite eine bei einer Intensität von 10% der Maximalintensität in radialer Richtung bestimmte Ringbreite.

Der Bereich des kleinsten Durchmessers der Kaustik entlang der Propagationsrichtung des Strahls ist in der Regel die Strahltaille. Bei Einsatz einer Fokussieroptik ist der Bereich des kleinsten Durchmessers der Kaustik der Fokusbereich und damit die Fokuskaustik.

Der Quotient (Q) aus der Ringbreite (RB) und dem Strahlradius (SR) ist damit ein Zahlenwert ohne Einheit, der erfindungsgemäß bei einer 50%-Ringbreite kleiner als 0,6, bevorzugt kleiner als 0,5, besonders bevorzugt kleiner als 0,4 ist. Bei einer 10%-Ringbreite ist der Quotient bevorzugt kleiner als 1, bevorzugt kleiner als 0,9, besonders bevorzugt kleiner als 0,8.

Diese Kaustik des Laserstrahls und insbesondere auch des Fokus ist bevorzugt entlang eines Bereichs des Laserstrahls vorgesehen, so dass diese ringförmige Verteilung in zumindestens einem Bereich der Propagationsrichtung des transformierten Laserstrahls weitgehend erhalten bleibt. Es ist dabei möglich, dass die Werte des Quotienten aus Ringbreite und dem Strahlradius variieren, bevorzugt bleiben diese jedoch weitgehend konstant. Damit weist der transformierte Laserstrahl eine definierte Ringstruktur bzw. eine ringförmige Intensitätsverteilung über einen Bereich der Propagationsrichtung in einer Ebene senkrecht zur Propagationsrichtung auf.

Die ringförmige Struktur kann auch eine Ellipse sein, oder eine quasi ringförmige Struktur mit einem Minimum der Intensität im mittleren Bereich und einer diese umgebende erhöhte Intensitätsverteilung. Denkbar ist auch eine Verteilung mit mehreren Minima, wie eine liegende Acht in der x-y-Ebene, d.h. der Ebene senkrecht zur Propagationsrichtung.

Dies könnte beispielsweise durch die benachbarte Positionierung zweier Kreise erreicht werden. Besonders bevorzugt wird der Laserstrahl in einen Ringfokus transformiert, besonders bevorzugt in einen Strahl mit Laguerre'schen Ringmoden.

Eine Ringstruktur kann bevorzugt durch Singularitäten der Phase erzeugt werden. Diese Singularitäten werden auch optische Wirbel genannt. Es sind Stellen des skalaren Lichtfeldes, an denen die Phase des Lichts nicht definiert ist und die Intensität verschwindet.

Über eine solche Laserbearbeitungsvorrichtung, die eine derart definierte Kaustik insbesondere im Fokus eines Laserstrahls mit ringförmiger Intensitätsverteilung erzeugt, kann im Gegensatz zu herkömmlichen Laserbearbeitungsvorrichtungen eine hohe Intensität an Leistung in den Randbereich des ringförmigen Fokus in das Werkstück eingebracht werden, ohne dass im Zentrum Material direkt erhitzt wird. Dies führt beispielsweise beim Laserschweißen dazu, dass der Metalldampf im Keyhole nicht übermäßig erhitzt wird. Dies hat zur Folge, dass es zu geringeren Instabilitäten des Keyholes und der Schweißnaht kommt, was zu einer optimierten Qualität der Schweißnaht führt. Durch die hohe Konzentration der Laserleistung im definierten Ringbereich des Laserstrahls können anders als beim Schweißen mit Gauß-förmiger Intensitätsverteilung die Schwellintensitäten überschritten werden und eine Materialbearbeitung erfolgen.

In einem weiteren vorteilhaften Ausführungsbeispiel der vorliegenden Erfindung ist eine Vorrichtung zur Laserbearbeitung vorgesehen, bei der der Quotient (Q) aus radialer Ringbreite (RB) und Strahlradius (SR)über einen Bereich von mindestens n mal der Rayleighlänge zR vor und hinter dem Bereich des kleinsten Durchmessers der Kaustik entlang der Propagationsrichtung des Strahls (100') unter einer Abweichung von weniger als 10 % weiterhin erhalten bleibt, wobei n gleich 5, bevorzugt gleich 10, insbesondere bevorzugt gleich 50 ist.

Auf diese Weise wird in Propagationsrichtung des Laserstrahls vor und hinter dem Bereich des kleinsten Durchmessers der Kaustik entlang der Propagationsrichtung des Strahls ein Bereich geschaffen, in dem der Quotient im wesentlichen erhalten bleibt. Das bedeutet, dass die ringförmige Intensitätsverteilung des Strahls in einem Tiefenschärfenbereich vor und hinter dem Bereich des kleinsten Durchmessers der Kaustik erhalten bleibt. Bevorzugt beträgt eine etwaige Abweichung des Quotienten in dem definierten Bereich weniger als 30 %, bevorzugt weniger als 25 %, bevorzugt weniger als 20 %, bevorzugt weniger als 15 %, bevorzugt weniger als 10 %, bevorzugt weniger als 5 %, besonders bevorzugt weniger als 1 %.

Dieser Bereich vor und hinter dem Bereich des kleinsten Durchmessers der Kaustik entlang der Propagationsrichtung des Strahls beträgt bevorzugt mindestens n mal der Rayleighlänge zR, wobei n gleich 5, bevorzugt gleich 10, insbesondere bevorzugt gleich 50 ist. Besonders bevorzugt beträgt dieser Bereich mindestens 10 mm, bevorzugt 20 mm, besonders bevorzugt 100 mm

In einem weiteren vorteilhaften Ausführungsbeispiel der vorliegenden Erfindung ist eine Vorrichtung zur Laserbearbeitung vorgesehen, bei der der Bereich des kleinsten Durchmessers der Kaustik entlang der Propagationsrichtung der durch eine Fokussieroptik erzeugte Fokus ist.

Auf diese Weise ist ein Laserstrahl mit einer Kaustik im Fokus bereitgestellt, die bevorzugt über einen vordefinierten Tiefenschärfenbereich die über den Quotienten definierte Ringstruktur aufweist. Damit kann vorteilhaft ein Werkstück bearbeitet werden, ohne dass die Probleme beim Vorhandensein eines Intensitätsmaximums im Mittelpunkt eines Laserstrahles im Fokus auftreten würden.

In einem weiteren vorteilhaften Ausführungsbeispiel der vorliegenden Erfindung ist eine Vorrichtung zur Laserbearbeitung vorgesehen, bei der das optische Element (30) eine Quotienten-Einstelleinrichtung zur Einstellung des Quotienten (Q) aus radialer Ringbreite (RB) und Strahlradius (SR) aufweist.

Über eine Quotienten-Einstelleinrichtung kann der Quotient vorbestimmt werden bzw. bei der Laserbearbeitungsvorrichtung eingestellt bzw. geändert werden. Es ist so möglich, einen Laserstrahl mit vorbestimmter ringförmiger Intensitätsverteilung zu erzeugen und für verschiedene Anwendungsfälle gezielter auszuwählen. Es können auf diese Weise ringförmige Verteilungen mit geringer Ringbreite bei größeren Strahldurchmesser für Anwendungsfälle bereitgestellt werden, die dies erfordern und andere Quotienten für andere Anwendungen einstellen. Dies kann bevorzugt auch während des Betriebs der Laserbearbeitungsvorrichtung erfolgen.

Die Einstellung des Quotienten (Q) aus radialer Ringbreite (RB) und Strahlradius kann beispielsweise über die wiederholte Anwendung der Transformation des Laserstrahls durch das optische Element realisiert werden. Bei Verwendung transmittiver Optiken kann beispielsweise über eine Phoropter-anordnung eine Addition der einzelnen Optiken durch Einschwenken zusätzlicher Optiken realisiert werden. Bei einigen Optiken ist es auch möglich, die Wirkung durch Einsatz gegenteilig ausgebildeter Optiken wieder aufzuheben oder abzuschwächen. So ist beim Einsatz einer Vortex-Geometrie auf dem optischen Element der Quotient durch die Vortex-Steigung bestimmt, während der Durchmesser durch die Vortex-Steigung und Brennweite der Fokussieroptik und die Ausleuchtung der Linse bestimmt wird. Durch das Vorsehen verschiedener Vortext-Geometrien mit unterschiedlicher Steigung können diese addiert werden - wenn optische Elemente mit negativer Vortex-Steigung vorgesehen werden, können diese wieder zur (teilweisen) Reversion des Effekts genutzt werden.

In einem weiteren vorteilhaften Ausführungsbeispiel der vorliegenden Erfindung ist eine Vorrichtung zur Laserbearbeitung vorgesehen, bei der das optische Element (30) ausserhalb des Resonators angeordnet ist.

Auf diese Weise ist es möglich, ohne in den Resonator eingreifen zu müssen, die Struktur über optische Elemente ausserhalb des Resonators zu realisieren. Damit müssen keine Ring-Moden im Resonator erzeugt werden. Resonatorextern im Sinne der Erfindung ist aber bevorzugt auch eine Struktur, die auf dem Auskoppelspiegel des Resonators vorgesehen ist.

In einem weiteren vorteilhaften Ausführungsbeispiel der vorliegenden Erfindung ist eine Vorrichtung zur Laserbearbeitung vorgesehen, bei der der Wert des Strahlradius (SR) bevorzugt auf Höhe der Strahltaille bzw. des Fokus einstellbar ist.

Die Einstellung des Strahlradius bzw. des Strahldurchmessers erfolgt bevorzugt über die Quotienten-Einstelleinrichtung, insbesondere durch eine Modenänderung und damit einer Änderung der Kaustik des Strahls. Besonders bevorzugt erfolgt die Einstellung des Strahlradius über die Fokussieroptik.

In einem weiteren vorteilhaften Ausführungsbeispiel der vorliegenden Erfindung ist eine Vorrichtung zur Laserbearbeitung vorgesehen, bei der das optische Element (30) eine reflektive Optik ist und die reflektive Optik bevorzugt auch eine Geometrie zur Korrektur von Abbildungsfehlern aufweist.

Eine reflektive Optik ist insbesondere ein Spiegel. Besonders bevorzugt wird eine reflektive Optik eingesetzt, d.h. ein Spiegel bzw. eine reflektierende Fläche, die geeignet ist, den entsprechenden Laserstrahl, insbesondere den CO2-Laserstrahl zu reflektieren. Diese reflektive Optik enthält erfindungsgemäß eine Struktur, die den Laserstrahl in seiner Kaustik verändert und damit eine vorbestimmte geometrische Verteilung der Intensität entlang der Propagationsrichtung indiziert, d.h. den Laserstrahl in eine neue Gestalt mit neuer Intensitätsverteilung transformiert. Dies geschieht besonders bevorzugt durch Änderung der Mode des Laserstrahls.

Bevorzugt weist die reflektive Optik eine Geometrie zur Korrektur von Abbildungsfehlern auf, insbesondere zur Korrektur von Abbildungsfehlern, die aufgrund der Umlenkung des Laserstrahls durch das reflektive optische Element, d.h. insbesondere den Spiegel, bei der Transformation erzeugt wurde. Damit werden die Bildfehler, die durch verkippte Verwendung der reflektiven Optik, insbesondere von Vortex-Spiegel entstehen, korrigiert, um runde Ringfoki mit Spiegeloptiken zu erreichen. Bevorzugt kann diese Korrektur durch Diamantdrehen mit Fast-Tool direkt im Spiegel eingefügt werden. Multi-Spot-Foki können so analog bezüglich Symmetrie korrigiert werden.

Wenn die Phasenveränderung nicht durch transmittive Linsen sondern durch reflektive Optiken hervorgerufen werden, wird bevorzugt bei nennenswerter Verkippung diese Korrektur berücksichtigt, um nicht Bildfehler zu erzeugen.

Für ein Multi-Spot-Element (allgemeiner Dachspiegel mit n Facetten) kann die Korrektur wie folgt berechnet werden: Je nach gewünschter Orientierung phi der Spots im Strahl-Koordinatensystem (wobei phi=0 in Richtung der x-Achse zeigt) wird der kleine Dachkant-Winkel delta einer Facette bei 90°- Umlenkung in der z-y-Ebene zu delta= e/2*sqrt(1+(cos(phi))^2) wobei e der gewünschte, kleine Divergenz-Winkel der Strahlung zur Strahlachse ist und die Orientierung der Flächen unter dem auf das Umlenkspiegel-Koordinatensystem projizierten Winkel psi= arctan(tan(phi)*sqrt(2)) gewählt. Wobei psi=0 mit phi=0 zusammenfällt. Für andere Umlenkwinkel 2 Theta lässt sich die Korrektur analog ermitteln.

Ein Vortex-Spiegel hat den Vorteil, dass der Effekt auch bei verkippter Umlenkung in erster Ordnung zu einer azimuthal linear ansteigenden Phasenspirale führt. Die Größe der Verkippung bewirkt gleichzeitig eine Änderung der Größe der linearen Phasen-Steigung.

Experimentel wurden außerdem Asymmetrien im Fokus beobachtet, deren Ursache wohl in Bildfehlern höherer Ordnung liegen. Die Bildfeldkorrektur erfolgt dabei bevorzugt durch Anpassung der azimuthalen Steigung auf eine nicht-lineare Steigung: Die Kontour lautet bei 90° Umlenkung damit nicht f(z)=h*psi/(2*Pi) mit h= Sprunghöhe, die zum Umlenk-Winkel 2 Theta passt (h = N*lambda/(2*cos(Theta)) mit N als ganze Zahl und lambda der verwendeten Wellenlänge), sondern F(z)=h/(2*Pi)* arctan(tan(psi)/sqrt(2)) .

Dies entspricht in ähnlicher Weise einer elliptischen Anpassung der runden Kontur an die verkippte Umlenkebene.

Alle obigen Korrekturen können einfach auch auf andere Umlenkwinkel als 90° übertragen werden.

Bevorzugt ist es auch möglich, anstelle die Vortex-Spiegel mit einer einzigen Stufe zu versehen, die Vortex-Struktur, deren Phasensteigung mit dem Parameter N definiert wird, in N Segmente zu unterteilen, die jeweils kleinere Stufen der Höhe h/N enthalten. Es ist auch möglich, eine andere ganzzahlige Anzahl von Stufen vorzusehen, so dass die Gesamthöhe aller Stufen der Gesamthöhe h der einzigen Stufe entspricht. Dies kann aus Fertigungssicht von Vorteil sein. Bevorzugt wird die Stufe an einer Stelle auftreten, die durch die Anschlussbedingung einer stetigen Phasenlage des zu erzeugenden Strahls gegeben ist: An den Winkelpositionen phi, bzw. in der Projektion psi auf die Spiegelfläche, die gerade einem ganzzahligen Vielfachen von 2*Pi bei der resultierenden Phasenlage entspricht, kann ein Sprung der Höhe j*2*Pi erfolgen(mit j= ganzzahlig), ohne dass die Phasenlage oder der Strahl dadurch gestört wird. Demnach sind mögliche Sprungstellen psi_i für die Stufen bei psi_i=arctan(tan(i*2*Pi/N + phi0)/cos(Theta)) mit i= 0,1,2..N-1 und einem beliebigen offset phi0.

Auf diese Weise ist ein Laserstrahl mit einer weitgehend ringförmigen Fokus-Kaustik bereitgestellt worden. Der Laserstrahl kann bevorzugt mit hoher Strahlqualität bis nahe zur Linse propagiert werden und dann über das optische Element in einen ringförmigen Laserstrahl mit einem recht groß einstellbaren Fokus-Durchmesser mit ringförmiger Intensitätsverteilung transformiert werden.

Durch Propagation von divergenten Strahlen können Randbereiche der optischen Elemente getroffen werden - daher gibt es Verluste. Der Fokusdurchmesser ändert sich hierbei auch. Bevorzugt wird daher die Optik zur Transformation des Laserstrahls in einen Laserstrahl mit ringförmiger Intensitätsverteilung nahe der Fokussieroptik angeordnet. Damit kann ein Strahl guter Qualität (beispielsweise mit Teleskop-Korrektur) zum Schneidkopf propagieren und dort erst die Transformation stattfinden, indem beispielsweise über eine Vortex-Geometrie das n in dem TEM0n* erhöht wird. Dadurch wird dann auch der Durchmesser erhöht und die Strahlqualität erniedrigt. Beim Faserlaser ist es möglich, diese Struktur am Faserende oder in der nachgeordneten Fokussieroptik zu integrieren, beispielsweise als (polierte) Platte bzw. Linse in der Fokussieroptik.

In einer bevorzugten Ausführungsform der vorliegenden Erfindung umfasst die reflektive Optik einen Metallspiegel, insbesondere einen Cu-Spiegel.

Über den Metallspiegel ist es möglich, selbst CO2-Laserstrahlen abzulenken bzw. zu transformieren. Besonders bevorzugt ist der Spiegel aus Kupfer.

Die Vortex-Struktur kann bevorzugt auch in der Fokussieroptik integriert sein.

Eine Vortex-Struktur bzw. -Linse erzeugt einen spiralförmigen Phasenverlauf entlang der Propagationsrichtung und damit auch im Fokus. Damit existiert ein Nullfeld in der Mitte des Fokus und somit ein Ringmode. Die Vortexlinse kann damit Ringdurchmesser von bevorzugt < 1 mm bereitstellen. Der Strahl, der mit einem Vortex-Spiegel erzeugt wird, verhält sich im Wesentlichen wie ein Gauss-Laguerre-Mode TEM0n*. Der Mode TEM0n* wird dabei analog zum Gauss-Laguerre-Mode TEM0n bezeichnet, der mit einem gleichen, jedoch verdrehten TEM0n-Mode so überlagert ist, dass ein Ring mit Nullstelle im Zentrum entsteht. Diese Moden propagieren forminvariant auch außerhalb einer Fokus-Kaustik, so dass die ringförmige Intensitätsverteilung auch über einen großen Bereich entlang der Propagationsrichtung erhalten bleibt. Zwar sinkt mit zunehmendem n die Strahlqualität, die radiale Verteilung, d.h. der Quotient Q aus (radialer) Ringbreite gegenüber dem Ringdurchmesser, wird ebenfalls verringert, der Ring also "schärfer".

Durch einen Spiegel mit Vortex-Struktur ist der Laserstrahl damit in einen Strahl mit Vortex-Kaustik transformierbar. Durch einen Vortex-Spiegel wird der Laserstrahl bevorzugt resonatorextern in eine Ringstruktur transformiert. Damit ist es möglich, einen relativ kompakten Strahl mit wenig Divergenz bis nahe zur Linse zu propagieren, dort über einen Vortex-Spiegel zu reflektieren und damit in einen Laserstrahl mit Ringstruktur zu transformieren. Dort wird dann trotz gegebener, großer Linsenausleuchtung ein recht großer Fokus-Durchmesser erzeugt.

In einer bevorzugten Ausführungsform der vorliegenden Erfindung ist der Strahldurchmesser einstellbar, besonders bevorzugt einstellbar auf 0,6 mm bis 1,5 mm. Ganz besonders bevorzugt werden die Modenordnungen TEM0n bzw. bei der Vortex-Struktur TEM0n* eingestellt, indem die Modenordnung n ausgewählt wird, insbesondere mit n > 1, besonders bevorzugt mit n > 2 ganz besonders bevorzugt mit n >= 3. Bei der Erzeugung über eine Vortexgeometrie wird diese Modenzahl bevorzugt über eine n-Lambda Phasensteigung der Vortexgeometrie erzeugt werden. Für die unterschiedlichen Modenordnungen n können dann unterschiedliche Strahldurchmesser realisiert werden, beispielsweise für n = 4 etwa 0,6 mm bis 0,9 mm, für n = 6 etwa 0,8 mm bis 1,2 mm und für n = 8 etwa 1 mm bis 1,5 mm.

Durch die Einstellbarkeit des Ringfokus ist es vorteilhafterweise möglich, während eines Schweißvorgangs Aufschmelzvorgänge noch gezielter zu steuern. Dabei können beispielsweise Schmelzbäder erzeugt werden, in denen die aufgeschmolzene Schmelze eine geringere Dynamik aufweist und damit ein Herausspritzen der Schmelze vermieden wird. Bevorzugt ist es auch möglich, für verschiedene Laserschweißanwendungen unterschiedliche Durchmesser zu wählen. Besonders bevorzugt ist auch vorgesehen, dass die Intensität des Laserstrahls im Fokus veränderbar ist, insbesondere unabhängig vom gewählten Durchmesser. Damit eröffnen sich bei verschiedenen Schweißanwendungen die Möglichkeit, die gewünschte Energie über eine vorbestimmte Fläche, die durch den Durchmesser der Ringstruktur beschrieben wird, auf die Werkstücke aufzubringen.

Durch einen Fokus von etwa 0,6 mm bis 1,5 mm ist es beispielsweise vorteilhaft möglich, spaltbehaftete Strukturen zu verschweißen. Diese Strukturen weisen oftmals einen Spalt von mehr als 3% der Blechdicke auf und haben Blechdicken von mehr als 5 mm. Durch einen Fokus der beschriebenen Art können diese Werkstücke im I-Stoß aufgeschmolzen werden, ohne dass der Laserstrahl durch den Spalt hindurch propagieren würde oder aber aufgrund leichter Dejustage nur ein Werkstück im Randbereich aufschmilzt.

Die Aufgabe der vorliegenden Erfindung wird auch gelöst durch ein Verfahren zur Bearbeitung eines Werkstücks (20) mittels eines Laserstrahls (100'), umfassend die Schritte: Erzeugen eines Laserstrahls (100') mit einer ringförmigen Intensitätsverteilung entlang eines Bereichs der Kaustik des Laserstrahls (100'), wobei die ringförmige Intensitätsverteilung im Bereich des kleinsten Durchmessers der Kaustik entlang der Propagationsrichtung des Strahls (100') in einer Ebene senkrecht zur Propagationsrichtung des Strahls (100') einen nach der 2.-Momente-Methode bestimmten Strahlradius (SR) und eine bei einer Intensität von 50% der Maximalintensität in radialer Richtung bestimmte Ringbreite (RB) aufweist, wobei der Quotient (Q) aus der Ringbreite (RB) und dem Strahlradius (SR) kleiner als 0,6, bevorzugt kleiner als 0,5, besonders bevorzugt kleiner als 0,4 ist und die Einstellung des Quotienten durch Verwendung einer Vortexgeometrie erfolgt.

Auf diese Weise kann über die Wahl des Quotienten ein Laserstrahl mit ringförmiger Intensitätsverteilung wie oben beschrieben erzeugt werden und mit diesem transformierten Laserstrahl ein Werkstück bearbeitet werden.

Bevorzugt wird der Laserstrahls (100') auf einen Bearbeitungsbereich fokussiert - hierbei bleibt der Quotient aus Ringbreite und Strahlradius in diesem Fokusbereich bevorzugt erhalten.

Bevorzugt erfolgt dann das Bearbeiten des Werkstücks (20) mit dem Laserstrahl mit ringförmiger Intensitätsverteilung. Besonders bevorzugt erfolgt die Einstellung des Quotienten über die Wahl einer Modenordnung für einen Ringmode TEM0n mit n > 1, bevorzugt n > 2, besonders bevorzugt n >= 3, ganz besonders bevorzugt n >= 5. Besonders bevorzugt erfolgt die Einstellung des Quotienten durch Verwendung einer Vortexgeometrie resonatorextern mit n-lambda Phasensteigung der Vortexgeometrie. Damit kann bevorzugt resonatorextern die Modenordnung n eingestellt werden und hierüber der Quotient gemäß der vorliegenden Erfindung genutzt werden.

Besonders bevorzugt werden zwei Werkstücke zusammengeschweißt. Die beiden Werkstücke können überlappend oder auf Stoß angeordnet sein. Es ist möglich, Stumpfnähte, Überlappnähte oder Kehlnähte zu erzeugen.

In einem bevorzugten Ausführungsbeispiel der vorliegenden Erfindung wird ein Überlappschweißen von verzinktem Karosserieblech oder Aluminium mit einer Modenordnung n von 3 bis 8, bevorzugt von 6 durchgeführt. Der hierdurch erzeugte Kamineffekt lässt den im Spalt entstehenden Zinkdampf bzw. Aluminiumdampf ohne Auswürfe der Schmelze entweichen. Bevorzugt wird ein erstes Werkstück (20.1) und/ oder ein zweites Werkstück (20.2), das ein Material mit hoher Abdampfrate aufweist, mit einem Laserstrahl bearbeitet, der einen Quotienten von weniger als 0,6, bevorzugt weniger als 0,5, bevorzugt weniger als 0,4, bevorzugt weniger als 0,39, bevorzugt von weniger als 0,37, besonders bevorzugt von weniger als 0,35 aufweist. Dies entspricht einer eingestellten Modenordnung von 3 bis 8, insbesondere von 6.

Ein Material mit hoher Abdampfrate ist ein Material, bei dem beim Erhitzen Anteile abdampfen können und damit die Schmelze verlassen würden. Beispiele für solche Materialien sind Buntmetall, d.h. Metalle mit verschiedenen Legierungsbestandteile, verzinkte Bleche, Al-beschichtete Bleche, Aluminiumbleche, Bleche aus Aluminiumlegierungen bzw. allgemein beschichtete Bleche oder Materialen mit einer mit diesen Bestandteilen beschichteten Oberfläche.

Auf diese Weise ist eine Verfahren zur Steigerung der Prozesseffizienz, der Prozessstabilität und der Schweißnahtqualität beim CO2-Laserschweißen von Materialien mit hohen Abdampfraten (insbesondere Buntmetalle wie Aluminiumlegierungen oder verzinkte Bleche) durch Optimierung der räumlichen Fokusstruktur bereitgestellt. Besonders bevorzugt weist der Laserstrahl hierbei eine ringförmige Intensitätsverteilung entlang der gesamten Fokuskaustik auf.

Für die Schweißbearbeitung von Materialien mit hohen Abdampfraten können durch die Verwendung eines ringförmig transformierten CO2-Laserstrahls, dessen Ringdurchmesser und dessen im Ring vorherrschende Spitzenintensität bevorzugt unabhängig voneinander eingestellt werden kann, Prozesseffizienz, die Prozessstabilität und die Schweißnahtqualität verbessert werden. Durch die bevorzugt richtungsunabhängige, symmetrische Querschnittsvergrößerung der Dampfkapillare insbesondere auch unterhalb des Fokuspunktes ist eine prozessangepasste Aufweitung der Dampfkapillare möglich. Dies erfolgt bevorzugt mit einem unabhängig von der Brennweite der verwendeten Fokussieroptik einstellbaren Ringdurchmesser unter Aufrechterhaltung größtmöglicher Intensitätswerte. Dies kann bevorzugt durch Verwendung kurzbrennweitiger Fokussieroptiken erfolgen. Dadurch wird die Einkoppeleffizienz, Prozessstabilität sowie Nahtqualität verbessert.

In einem weiteren bevorzugten Ausführungsbeispiel der vorliegenden Erfindung werden Taylored-Blanks im I-Stoss mit einer Modenordnung n von 3 bis 4 verschweißt. Hierdurch wird die Einkoppeleffizienz erhöht und die Spaltüberbrückbarkeit verbessert.

In einem weiteren bevorzugten Ausführungsbeispiel der vorliegenden Erfindung werden breite Schweißnähte auch bei großen Einschweißtiefen von mehr als 2 mm mit einer Modenordnung n von 4 bis 6 erzeugt. Hiermit lassen sich auch in den großen Schweißtiefen von mehr als 2 mm sehr breite Nähte von mehr als 1 mm erzeugen, ohne dass die Einschweißtiefe im Vergleich zum Einfachfokus nach dem Stand der Technik signifikant zunehmen würde. Mit bisherigen Verfahren aus dem Stand der Technik ist dies nicht möglich, da diese Verfahren nur an der Oberfläche wirken. Hierbei wird bevorzugt ein erstes Werkstück (20.1) und ein zweites Werkstück (20.2) im Tiefschweißverfahren miteinander verschweißt und der Laserstrahl (100') weist einen Quotienten von weniger als 0,6, bevorzugt weniger als 0,5, bevorzugt weniger als 0,4, bevorzugt weniger als 0,37, bevorzugt von weniger als 0,36 auf.

Dies wird bevorzugt durch kohärente Phasenmodulation bewirkt und die ursprünglich homogene Intensitätsverteilung des Laserstrahls wird in eine ringförmige transformiert, welche insbesondere auch ringförmig durch die Fokuskaustik propagiert.

Durch die bevorzugt wählbare, ringförmige Vergrößerung des Fokusdurchmessers wird der lokale Energieübergang im Keyhole gezielt gesteuert: hohe Ringdurchmesser bei gleichzeitig hohen Spitzenintensitäten im Ring führen schon bei geringen Eindringtiefen des Laserstrahls zur Absorption eines hohen Anteils der Laserstrahlenergie in der Metallschmelze. Hierdurch kann gezielt das Tiefe-zu-Breite-Verhältnis der Schweißnaht gesteuert und vorbestimmt werden.

Auf diese Weise kann beim Tiefschweißen mit dem erfindungsgemäßen Verfahren sichergestellt werden, dass ein vorbestimmtes Verhältnis der Schweißnaht eingehalten wird.

Abschirmungseffekte durch den aus dem Keyhole ausströmenden Metalldampf, welche insbesondere beim Schweißen mit CO2-Lasern typisch sind, werden durch die ringförmige Strahlformung minimiert und eine Reduktion der Ionisationsschwelle herbeigeführt. Der über die gesamte Fokuskaustik symmetrisch vergrößerte Querschnitt des Dampfkanals reduziert die Ausströmgeschwindigkeit des Metalldampfs analog zum Durchmesser des Dampfkanals. Durch die hieraus resultierende Verringerung der turbulenten Strömungen im Schmelzbad treten Verschlüsse des Dampfkanals mit nachfolgenden Poreneinschlüssen oder Schmelzgutauswürfen seltener auf.

Die Wirkung eines ringförmig fokussierten Strahls zeigt hierbei bevorzugt keinerlei Richtungsabhängigkeit in der Ebene (X-/Y-Richtung) und zeichnet sich insbesondere durch ein symmetrisches Einschweißverhalten bei Defokussierung in Strahlausbreitungsrichtung aus, da die Ringstruktur über einen vorbestimmten Bereich entlang der Propagationsrichtung erhalten bleibt. So kann auch beim Schweißen von Strukturen, die in Propagationsrichtung beim Verfahren der Laserbearbeitungsdüse über dem Werkstück Änderungen aufweisen, eine verlässliche Schweißnaht beim Tiefschweißen erzeugt werden, ohne dass der Laserbearbeitungskopf in Propagationsrichtung verfahren werden müsste, da die Ringstruktur über einen Bereich der Propagationsrichtung erhalten bleibt.

Die durch die kohärente Phasenmodulation erstmals gegebene Möglichkeit der Kombination einer möglichst kurzen Brennweite (hohe Spitzenintensität im Ring) mit einem ausreichend großen Ringdurchmesser (da, di) ermöglicht mit diesem Verfahren das gleichzeitige Erreichen hoher Durchmesser der Dampfkapillare einerseits und einer hohen Prozesseffizienz andererseits, weil unabhängig vom Ringdurchmesser des fokussierten Strahls vor allem die Wandfläche des Dampfkanals und damit die Schmelze selbst mit höchstmöglichen Intensitäten bestrahlt wird.

Mit Hilfe einer kohärenten Phasenmodulation, welche an beliebiger Position im Strahlengang zwischen Auskoppelspiegel und fokussierendem Element im Strahlengang vorgenommen wird, kann die ursprüngliche, typischerweise homogene Intensitätsverteilung (rotationssymmetrischer TEM, Gaußverteilung) eins CO2-Laserstrahls in eine ringförmige Intensitätsverteilung mit bevorzugt einstellbarem Verhältnis zwischen dem ursprünglichen Strahldurchmesser und dem nach der Transformation meßbaren Ringdurchmesser transformiert werden. Diese ringförmige Intensitätsverteilung bleibt im Gegensatz zu bisherigen Methoden zur Strahlformung auch während bzw. nach einer Abbildung erhalten. Die Fokuskaustik eines durch eine kohärente Phasenmodulation ringförmig transformierten Strahls weist also bevorzugt nicht nur vor dem Fokuspunkt eine ringförmige Verteilung auf, sondern insbesondere auch im Fokuspunkt selbst bzw. dahinter. Ringdurchmesser und Spitzenintensität im fokussierten Strahl folgen hierbei den für rotationssymmetrischen TEM bekannten Gesetzmäßigkeiten.

Bevorzugt wird ein ringförmig transformierter CO2-Laserstrahl verwendet, dessen Ringdurchmesser und dessen im Ring vorherrschende Spitzenintensität bevorzugt unabhängig voneinander eingestellt werden kann, besonders bevorzugt durch einfachen Tausch optischer Elemente am Bearbeitungspunkt. Für Schweißbearbeitungsaufgaben mit hohen Anforderungen an das Einhalten einer genau vorgegebenen Nahtgeometrie (wie das Tiefschweißen), können damit die nachfolgend beispielhaft aufgeführten Verfahrensvorteile erzielt werden:

Die gezielte Steuerung der Schweißnahtgeometrie beim Tiefschweißen mit CO2-Laserstrahlung ist vorteilhaft ermöglicht durch eine richtungsunabhängige, symmetrische Querschnittsvergrößerung der Dampfkapillare, insbesondere auch unterhalb des Fokuspunktes. Während mit einem fokussierten Strahl im Stand der Technik das Profil beim Tiefschweißen sich nach unten stark verjüngte, können mit dem erfindungsgemäßen Verfahren Profile mit einer breiteren Durchdringung und Ausbildung des Schmelzbades und damit der Schweißnaht auch im unteren Bereich erreicht werden. Dies geschieht insbesondere durch eine prozessangepasste Aufweitung der Dampfkapillare (einstellbarer Ringdurchmesser unabhängig von der Brennweite der verwendeten Fokussieroptik) und hierdurch eine gezielte Steuerung der resultierenden Nahtform. Dadurch ist auch eine gezielte Steuerung des lokalen Energietransfers vom Laserstrahl in die Schmelze möglich.

Durch das erfindungsgemäße Verfahren können beispielsweise durch Verwendung bevorzugt kurzbrennweitiger Fokussieroptiken größtmögliche Intensitätswerte aufrechterhalten werden. Dadurch wird die Einkoppeleffizienz, die Prozessstabilität sowie die Nahtqualität verbessert.

Durch die Ringstruktur bzw. die zylinderförmige Struktur des Laserstrahls auch hinter dem Fokuspunkt ist es möglich, lediglich die Dampfkapillarwand (= Schmelze) gezielt bzw. selektiv zu bestrahlen. Dadurch werden auch Streuverluste im Zentrum des Laserstrahls, in dem die Intensität gleich null ist, durch herausströmenden Metalldampf minimiert, indem die Laserleistung auf den Randbereich des Laserstrahls (= Ring) konzentriert wird. Da nun auch die Erhitzung des durch die Dampfkapillare aus dem Schmelzbad herausströmenden Metalldampfes minimiert ist, wird die Ionisationsschwelle erhöht. Dieser verbesserte Schutz vor Erhitzung des Metalldampfes auf Ionisationstemperatur wird bereits innerhalb der Dampfkapillare bewirkt, wo der Metalldampf von der kühlenden Wirkung von Arbeits-/Schutzgasen nicht erreicht wird. Dadurch wird auch das Risiko eines kompletten Verschlusses der Dampfkapillare durch vollständig ionisierten Metalldampf in der Dampfkapillare bzw. über dem Werkstück minimiert und dadurch ebenfalls die Ionisationsschwelle erhöht.

Durch das erfindungsgemäße Verfahren werden beim Tiefschweißen auch Turbulenzen im Schmelzbad durch die mit der Querschnittserhöhung des Dampfkanals einhergehende Verringerung der Strömungsgeschwindigkeit des Metalldampfs in der Dampfkapillare reduziert.

Da der Metalldampf beim Ausströmen aus dem Dampfkanal nach dem erfindungsgemäßen Verfahren eine geringere Geschwindigkeit bzw. eine geringere kinetische Energie aufweist, ist die Schutzgaswirkung verbessert.

Durch die Erhöhung der Ionisationsschwelle werden auch vorteilhafterweise die Prozesskosten reduziert - so kann statt teurem Helium mit maximaler Kühlwirkung bzw. Ionisationsenergie kostengünstigeres Argon mit mittlerer Kühlwirkung bzw. Ionisationsenergie eingesetzt werden.

Da auch weitere Fokussieroptiken eingespart werden, tritt weniger Leistungsverlust auf, bevor der Laserstrahl auf den Werkstücken zur Wirkung kommt - dadurch ist auch die Prozessstabilität verbessert, da durch die Einsparung von Optiken eine geringere Verschmutzungsrate von Optiken und Spannvorrichtungen bzw. Bauteilpositioniervorrichtungen auftritt.

In einem weiteren bevorzugten Ausführungsbeispiel der vorliegenden Erfindung werden Spaltüberbrückungen im I-Stoss von dicken Stahlblechen mit Blechdicken von mehr als 5 mm und großen Spalten von mehr als 3 % der Blechdicke mit einer Modenordnung n von 4 bis 8, besonders bevorzugt von n = 6 verschweißt. Hierdurch wird die Einkoppeleffizienz erhöht und die Spaltüberbrückbarkeit verbessert.

Im Schiffsbau, Schwermaschinenbau, Behälterbau, bei Tailored Blanks oder der Gehäusefertigung kommt das Tiefschweißen spaltbehafteter Bauteile mit CO2-Laserstrahlung zum Einsatz. Hier gilt es neben einer Tiefschweißnaht auch Spalte überbrücken zu können, die in diesen Anwendungsfällen auftreten, insbesondere dadurch, dass diese Werkstücke nebeneinander angeordnet bzw. gefügt werden und dabei dennoch ein Spalt auftritt. Solche Spalte können Ausmaße von mehr als 3 % der Blechdicken haben.

Durch die bevorzugt wählbare, ringförmige Vergrößerung des Fokusdurchmessers wird der lokale Energieübergang im Keyhole gezielt gesteuert: hohe Ringdurchmesser bei gleichzeitig hohen Spitzenintensitäten im Ring führen schon bei geringen Eindringtiefen des Laserstrahls zur Absorption eines hohen Anteils der Laserstrahlenergie in der Metallschmelze. Das gezielte Aufschmelzen der Bauteilkanten zur Erzeugung eines ausreichend hohen Schmelzbadvolumens kann hierdurch erzielt werden.

Die bevorzugt durch die kohärente Phasenmodulation gegebene Möglichkeit der Kombination einer möglichst kurzen Brennweite (hohe Spitzenintensität im Ring) mit einem ausreichend großen Ringdurchmesser ermöglicht mit diesem Verfahren das gleichzeitige Erreichen hoher Durchmesser der Dampfkapillare einerseits und einer hohen Prozesseffizienz andererseits, weil unabhängig vom Ringdurchmesser des fokussierten Strahls immer nur die Wandfläche des Dampfkanals und damit die Schmelze selbst mit höchstmöglichen Intensitäten bestrahlt wird.

Neben den bereits beim Tiefschweißen aufgeführten Vorteilen eine noch gezieltere Optimierung der Spaltüberbrückung beim Tiefschweißen spaltbehafteter Bauteile mit CO2-Laserstrahlung erreicht werden.

Durch die gezielte Bestrahlung der Bauteiloberflächen am Rand des Fügespaltes wird ein ausreichend großes Schmelzbadvolumen erzeugt. Durch das erfindungsgemäße Verfahren ist eine richtungsunabhängige, symmetrische Querschnittsvergrößerung des fokusierten Laserstrahls insbesondere auch unterhalb des Fokuspunktes erreichbar. Durch eine prozessangepaßte Aufweitung des Laserstrahls durch Anpassung des Durchmessers der Ringstruktur ist eine gezielte Anpassung der bestrahlten Oberfläche an die Breite des Fügespaltes möglich. Besonders bevorzugt ist ein einstellbarer Ringdurchmesser unabhängig von der Brennweite der verwendeten Fokussieroptik vorgesehen.

In einem weiteren bevorzugten Ausführungsbeispiel der vorliegenden Erfindung wird der Quotient (Q) aus radialer Ringbreite (RB) und Strahlradius (SR) über einen Bereich von mindestens n mal dem Strahlradius (SR) vor und hinter dem Bereich des kleinsten Durchmessers der Kaustik entlang der Propagationsrichtung des Strahls (100') unter einer Abweichung von weniger als 10 % weiterhin erhalten, wobei n gleich 2, bevorzugt gleich 5, insbesondere bevorzugt gleich 50 ist.

Mit dieser "Tiefenschärfe" im Bereich des kleinsten Durchmessers der Kaustik entlang der Propagationsrichtung des Strahls können die beschriebenen Effekte bei den einzelnen Schweißanwendungen erzielt werden.

Die Bearbeitung eines Werkstücks (20) mittels eines Laserstrahls (100) umfasst bevorzugt Schweißen, Schneiden, Schmelzen, Erwärmen, Abtragen, Markieren, thermisches Fügen oder eine Kombination hiervon.

Die hier beschriebenen Vorteile lassen sich auf die verschiedenen Bearbeitungsverfahren übertragen, da mit dem erfindungsgemäßen Verfahren bzw. der Vorrichtung eine Möglichkeit zur Bearbeitung mit einem Laserstrahl mit wohl definierter Intensitätsverteilung im Ring bereitgestellt wird. Durch das ausgeprägte Intensitätsminimum im Zentrum des Laserstrahles und die Konzentration im Randbereich des Ringes können beim Schneiden bzw. Schweißen und bei den anderen Anwendungen Vorteile bei der Gestaltung der Schmelzdynamik erreicht werden.

Bevorzugt werden bei den erfindungsgemäßen Verfahren als ein Schutzgas Argon, N2, CO2 oder eine Kombination hiervon eingesetzt.

Besonders bevorzugt wird der Laserstrahl über eine reflektive Optik geleitet, d.h. beispielsweise über einen Metallspiegel bzw. Cu-Spiegel. Hierdurch wird bevorzugt resonatorextern ein Laserstrahl erzeugt, der eine ringförmige Intensitätsverteilung entlang eines Bereichs der Fokuskaustik des Laserstrahls aufweist, d.h. einen Ringfokus über einen Bereich der Propagationsrichtung des Laserstrahls im Fokus hat. Durch kohärente Phasenmodulation wird die ursprünglich homogene Intensitätsverteilung eines Laserstrahls damit bevorzugt in eine ringförmige transformiert, welche insbesondere auch ringförmig durch die Fokuskaustik propagiert. Bevorzugt wird hierbei ein Laserstrahl mit Laguerre'sche Ringmoden erzeugt. Besonders bevorzugt wird auf der reflektiven Optik der Strahl in eine Vortex-Struktur über die Propagationsrichtung transformiert, so dass der Laserstrahl über einen weiten Bereich des Fokus entlang der Propagationsrichtung eine Ringstruktur aufweist und der Laserstrahl dadurch eine zylinderähnliche Intensitätsverteilung in Propagationsrichtung um die Propagationsrichtung aufweist. Durch die Verwendung eines Vortex-Spiegels ist dieser Bereich quasi beliebig lang realisierbar.

Besonders bevorzugt ist der Durchmesser des Laserstrahls mit Ringfokus einstellbar. Insbesondere bevorzugt ist der Strahldurchmesser sowie die Ringbreite einstellbar.

Dieses erfindungsgemäße Verfahren wird bevorzugt auch zum Optimieren der Schweißnahtgeometrie und Prozesseffizienz beim Fügen von Blechen geringer Dicke mit CO2-Laserstrahlung verwendet. Durch die Optimierung der räumlichen Fokusstruktur als ringförmige Intensitätsverteilung entlang der gesamten Fokuskaustik ist es möglich, die dünnen Bleche zu verschweißen, ohne dass der Laserstrahl die Bleche durchbricht oder durch Dynamik in der Schmelze zu Verwürfen und Unregelmäßigkeiten in der Oberraupe der Schweißnaht führt.

Durch die wählbare, ringförmige Vergrößerung des Fokusdurchmessers wird der lokale Energieübergang vom Laserstrahl in die erzeugte Metallschmelze gezielt gesteuert: hohe Ringdurchmesser bei gleichzeitig hohen Spitzenintensitäten im Ring führen schon bei geringen Eindringtiefen des Laserstrahls zur Absorption eines hohen Anteils der Laserstrahlenergie in der Metallschmelze, wodurch das Tiefe-zu-Breite-Verhältnisses der Schweißnaht gezielt steuerbar wird. Hierdurch sind auch bei dünnen Blechen breite Schweißnähte realisierbar, die nicht durch die Bleche zu Durchbrüchen führen.

Die durch die kohärente Phasenmodulation gegebene Möglichkeit der Kombination einer möglichst kurzen Brennweite (hohe Spitzenintensität im Ring) mit einem ausreichend großen Ringdurchmesser ermöglicht mit diesem Verfahren das gleichzeitige Erreichen einer bis zu mehreren Millimetern breiten Metallschmelze einerseits und einer hohen Prozesseffizienz andererseits, weil unabhängig vom Ringdurchmesser des fokussierten Strahls durch das Bestrahlen des Werkstücks mit höchstmöglichen Intensitäten ein ringförmiger Dampfkanal erzeugt wird, in welchem der größte Teil der Laserstrahlung durch Vielfachreflexion absorbiert wird. Das Verfahren ermöglicht insbesondere auch das Erzeugen von Schweißnahtgeometrien mit maximaler Prozesseffizienz, welche durch bisherige Strahlformungsverfahren nur unter beträchtlichen Effizienzeinbußen erzielt werden konnten, da beim Wärmeleitschweißen bisher im Stand der Technik mit stark defokussierter Strahlung gearbeitet wurde.

Für das Fügen von Blechen geringer Dicke mit CO2-Laserstrahlung kann erfindungsgemäß ein ringförmig transformierter CO2-Laserstrahl verwendet werden, dessen Ringdurchmesser und dessen im Ring vorherrschende Spitzenintensität bevorzugt unabhängig voneinander und durch einfachen Tausch optischer Elemente am Bearbeitungspunkt eingestellt werden. Auf diese Weise ist es möglich, die Schweißnahtgeometrie beim Fügen von Blechen geringer Dicke mit CO2-Laserstrahlung gezielt zu steuern, da die richtungsunabhängige, symmetrische Querschnittsvergrößerung der Dampfkapillare insbesondere auch unterhalb des Fokuspunktes wirken kann. Damit ist eine prozess- und damit geometrieangepasste Verbreiterung der Schmelze, insbesondere durch den einstellbaren Ringdurchmesser unabhängig von der Brennweite der verwendeten Fokussieroptik, unter Aufrechterhaltung größtmöglicher Intensitätswerte , insbesondere bevorzugt durch Verwendung kurzbrennweitiger Fokussieroptiken, und dadurch optimaler Einkoppeleffizienz, Prozessstabilität sowie Nahtqualität erreichbar.

Durch das gezielte, selektive Bestrahlen lediglich der ringförmigen Dampfkapillare kann die Energie in einem breiten Bereich in die Werkstücke eingebracht werden. Damit ist eine gezielte Steuerung des lokalen Energietransfers vom Laserstrahl in die Schmelze möglich. Durchstrahlungsverluste im Zentrum der Schmelze bzw. des Laserstrahls werden durch gezielte Konzentration der Laserleistung auf den Randbereich des Laserstrahls, d.h. auf die Ringgeometrie minimiert. Dadurch dass das Schmelzbad im Zentrum des Strahls nur minimal erhitzt wird, kann die Ionisationsschwelle erhöht werden. Auf diese Weise wird ein Durchgang oder ein Herabtropfen der Schmelze durch geringe Temperatur und hohe Viskosität der Schmelze im Zentrum des Strahls verhindert.

Da nur eine minimale Eindringtiefe des Laserstrahls zum Erzielen einer durchgängigen Naht erforderlich ist, werden Turbulenzen im Schmelzbad reduziert. Dies wird unterstützt durch die hohe Breite der Schmelze und damit einhergehend den minimalen Wärmeleitungsverlust ins Grundmaterial.

In den Figuren sind weitere vorteilhafte Ausgestaltungen gezeigt. Die Figuren zeigen:

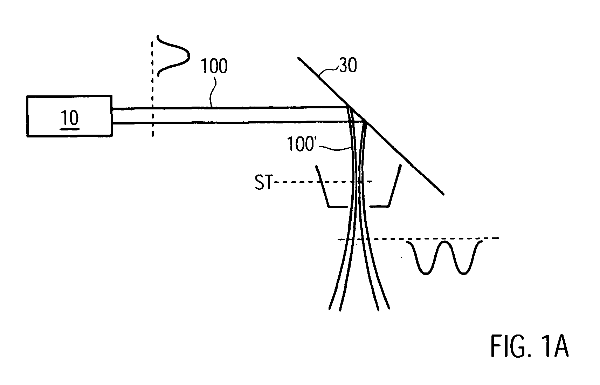

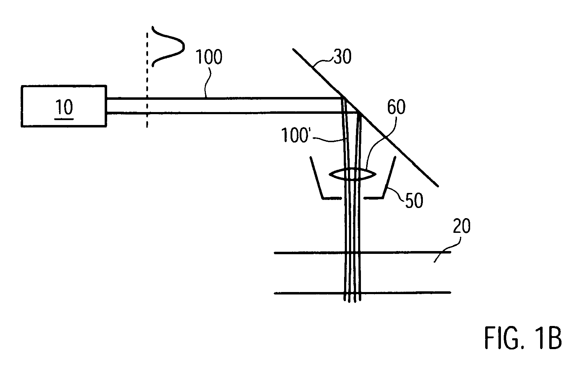

- Fig. 1 a: eine schematische Ansicht eines Ausführungsbeispiels einer erfindungsgemäßen Vorrichtung zum Laserschweißen;
- Fig. 1 b: eine schematische Ansicht eines Ausführungsbeispiels einer erfindungsgemäßen Vorrichtung zum Laserschweißen gemäß Figur 1 A mit Fokussieroptik;
- Fig. 2a-b: eine dreidimensionale Ansicht eines transformierten Laserstrahls gemäß eines Ausführungsbeispiels der vorliegenden Erfindung sowie ein Diagramm zur Veranschaulichung der Bestimmung der Ringbreite;
- Fig. 3: eine Ansicht eines Schweißvorgangs bei einem erfindungsgemäßen Ausführungsbeispiel zum Tiefschweißverfahren;
- Fig. 4: eine Ansicht eines Schweißvorgangs bei einem erfindungsgemäßen Ausführungsbeispiel zum spaltbehafteten Tiefschweißverfahren; und
- Fig. 5: eine Ansicht eines Schweißvorgangs bei einem erfindungsgemäßen Ausführungsbeispiel zum Überlappschweißverfahren.

In **Figur 1** **a** wird eine schematische Ansicht eines Ausführungsbeispiels einer erfindungsgemäßen Vorrichtung zur Laserbearbeitung dargestellt. Ein Laser 10 emittiert einen Laserstrahl 100 mit gaußförmigem Profil. Der Laserstrahl 100 wird über einen Vortex-Spiegel 30 geleitet und durch diesen in einen Laserstrahl 100' transfomiert. Dieser transformierte Laserstrahl 100' weist eine Intensitätsverteilung nach einer Vortex-Struktur auf, d.h., dass der modifizierte Laserstrahl 100' eine ringförmige Intensitätsverteilung in einer Ebene senkrecht zur Propagationsrichtung über den gesamten Bereich der Propagationsrichtung aufweist. Der modifizierte Laserstrahl (100') weist auf der Höhe der gestrichelten Linie ST ein Minimum des Strahldurchmessers entlang der Propagationsrichtung des modifizierten Laserstrahls (100') auf, die sogenannte Strahltaille. In diesem Bereich gelten die erfindungsgemäßen Verhältnisse zwischen der Ringbreite und dem Strahldurchmesser bzw. dem Strahlradius. Die Anordnung gemäß Figur 1 a umfasst noch keine Fokussieroptik.

In **Figur 1** **b** ist die schematische Ansicht aus Figur 1 a um eine Fokussieroptik 60 ergänzt dargestellt. Der modifizierte Laserstrahl (100') wird nun über die Fokussieroptik 60 auf ein Werkstück 20 geleitet. Dieser fokussierte modifizierte Laserstrahl 100' wird über eine Laserbearbeitungsdüse 50 auf das Werkstück 20 ausgerichtet bzw. fokussiert. Im Brennpunkt, des modifizierten Laserstrahls 100' innerhalb des Werkstücks 20 weist der modifizierte Laserstrahl 100' ebenfalls eine ringförmige Intensitätsverteilung auf. Diese ringförmige Intensitätsverteilung besteht damit vor dem Brennpunkt und auch beim Durchtritt durch den Brennpunkt dahinter. In dem Fokus-Bereich ist das erfindugsgemäße Verhältnis zwischen Ringradius und Strahlradius realisiert. Über die Laserbearbeitungsdüse kann nun bevorzugt auch ein Schutzgas oder Arbeitsgas in Richtung auf das Werkstück 20 appliziert werden, das den Bearbeitungsvorgang unterstützt.

Im Betrieb kann nun über den Laser 10 ein Laserstrahl 100 emittiert werden, wobei dieser von seiner Energie her konstant gehalten wird oder aber je nach Anwendungsfall variiert werden kann. Über die Wahl des Vortex-Spiegels 30 bzw. des Einsatzes mehrerer Vortex-Spiegel 30 kann der Gang bzw. der Durchmesser des Ringfokus des modifizierten Laserstrahls 100' vorgewählt werden. So ist es möglich, zwischen verschiedenen Bearbeitungsanwendungen oder im Laufe eines angewandten Bearbeitungsverfahrens den Durchmesser des Ringfokus im Brennpunkt des modifizierten Laserstrahls 100' sowie dessen Intensität zu variieren.

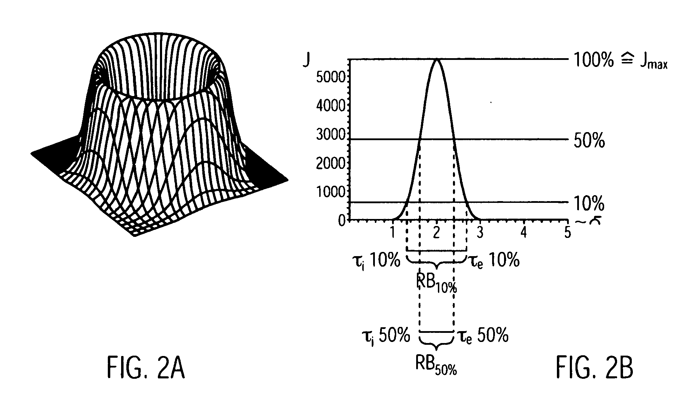

In **Figur 2** **a** ist eine dreidimensionale Ansicht eines transformierten Laserstrahls gemäß eines Ausführungsbeispiels der vorliegenden Erfindung und **Figur 2** **b** zeigt ein Diagramm zur Veranschaulichung der Bestimmung der Ringbreite.

In **Figur 2a** ist eine dreidimensionale Ansicht eines transformierten Laserstrahls gemäß eines Ausführungsbeispiels der vorliegenden Erfindung gezeigt, wobei die ringförmige Intensitätsverteilung des modifizierten Laserstrahls 100' mit einer Intensitätsverteilung mit Ringfokus im Brennpunkt in einer Ebene senkrecht zur Propagationsrichtung des Laserstrahls dargestellt ist. Die Intensitätsverteilung zeigt ein kreisförmiges Maximum an Intensität, die zum Mittelpunkt hin abnimmt und dort eine Nullstelle aufweist. Vom Mittelpunkt weg nach aussen hin nimmt die Intensität ebenfalls ab.

In **Figur 2** **b** ist die Intensitätsverteilung des modifizierten Lasserstrahls 100' aus Figur 2a im senkrechten Schnitt dargestellt. Der Mittelpunkt befindet sich am Nullpunkt der x-Achse. Auf der x-Achse ist eine Längeneinheit abgetragen, die direkt proportional zur Entfernung vom Mittelpunkt in radialer Richtung ist. Auf der y-Achse ist die Intensität an dem entsprechenden radialen Punkt abgetragen. Es ergibt sich eine gaussförmige Intensitätsverteilung um einen Maximalwert auf Höhe des Wertes 2 auf der x-Achse. Nicht dargestellt ist die zweite Intensitätsverteilung in negativer Richtung der x-Achse - dort wäre bei dem x-Wert -2 ein entsprechendes Intensitätsmaximum. Die eingezeichnete Intensitätsverteilung ist rotationssymmetrisch um die y-Achse zu verstehen.

Parallel zur x-Achse sind drei Intensitätsniveaus eingezeichnet und mit 10%, 50% und 100% = Imax bezeichnet. Es handelt sich hierbei um die Niveaus, bei denen die Intensität den entsprechenden Bruchteil der Maximalintensität erreicht hat. Die Schnittpunkte dieser Niveaus von 10% und 50% geben nun die x-Werte ri und ra an, die als innerer und äusserer Radius zur Bestimmung der Ringbreite RB herangezogen werden. Die Werte bei 10 % ergeben dann die 10%-Ringbreite RB 10% und die Werte bei 50 % ergeben dann die 50%-Ringbreite RB 50%. So gilt RB50% = ra (50%) - ri (50%). Für die 50%-Ringbreite liest man einen Wert von ca. 0,8 [Längeneinheiten] ab.

Der Strahlradius wird bevorzugt nach der 2.-Momente-Methode bestimmt und ist hier nicht eingezeichnet. Vereinfacht kann man in diesem sehr symmetrischen Fall das Intensitätsmaximum als Strahlradius heranziehen, so dass sich ein Strahlradius von ca. 2 [Längeneinheiten] ergibt.

Im Ergebnis ergibt sich damit ein Quotient von 50%-Ringbreite und Strahlradius von etwa 0,8 / 2 = 0,4.

Bei einem Vortex-Spiegel wird hierbei das Verhältnis zwischen Ringbreite zu Strahlradius durch die Vortex-Steigung bestimmt, während der Strahldurchmesser durch die Vortex-Steigung und Brennweite der Fokusieroptik und Ausleuchtung der Linse bestimmt wird. Beim Vortex-Spiegel weist der Ringfokus im Fokusbereich sich nur wenig verändernde Durchmesser und Breiten auf. Mit zunehmender Steigung eines Vortex-Spiegels nimmt bei einem hierdurch generierten Strahl bei zunehmender Steigung des Vortex-Spiegels das Verhältnis von Ringbreite zum Strahlradius ab. Auf diese Weise ist es möglich, das Verhältnis von Ringbreite zu Strahlradius voreinzustellen.

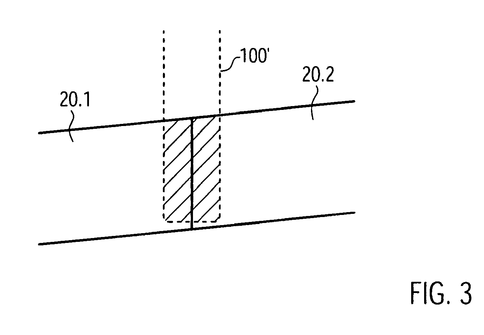

In **Figur 3** ist eine Ansicht eines Schweißvorgangs eines erfindungsgemäßen Ausführungsbeispiel zum Tiefschweißverfahren dargestellt. Ein modifzierter Laserstrahl 100' mit ringförmiger Intensitätsverteilung wird auf den Bereich zwischen zwei auf Stoß ausgerichtete Werkstücke 20.1 und 20.2 ausgerichtet. Hierbei überdeckt der modifizierte Laserstrahl 100' mit seinem Ringfokus zu beiden Seiten symmetrisch diesen Stoßbereich. Dargestellt ist hierbei ein Querschnitt des im Schweißnahtbereich wirkenden modifizierten Laserstrahls 100'. Durch den Laserstrahl 100' wird durch Aufschmelzen des Randbereichs des Werkstücks 20.1 und des Randbereichs des Randbereichs des Werkstücks 20.2 ein Schmelzbad erzeugt, das in seiner geometrischen Ausdehnung gestrichelt eingezeichnet ist. Das so erzeugte Keyhole weist im oberen und weitgehend im unteren Bereich den gleichen Durchmesser auf. Anders als bei herkömmlichen Tiefschweißverfahren nimmt der Durchmesser des Keyholes mit der Eindringtiefe nicht ab, da durch den ausgebildeten Ringfokus der Randbereich des Keyholes aufgeschmolzen wird und damit die Breite des Ringfokus bis in den unteren Bereich des Keyholes aufrecht erhalten werden kann. Auf diese Weise wird der aufgeschmolzene Bereich auch bis in die Tiefe in einer entsprechenden Breite realisiert, was die Güte der Schweißnaht erhöht. Außerdem wird durch die gleichmäßig verteilte Schmelze im aufgeschmolzenen Bereich die Dynamik im Schmelzbad verringert und damit auch die Qualität der Schweißnaht erhöht. Aufgrund der geringeren Dynamik bilden sich weniger Riefen an der Schmelzoberfläche beim Erstarren aus. Auf diese Weise ist es mit dem erfindungsgemäßen Verfahren unter Einsatz eines Laserstrahls mit Ringfokus beim Tiefschweißen möglich, eine optimierte Schweißnaht auch in der Tiefe auszubilden.

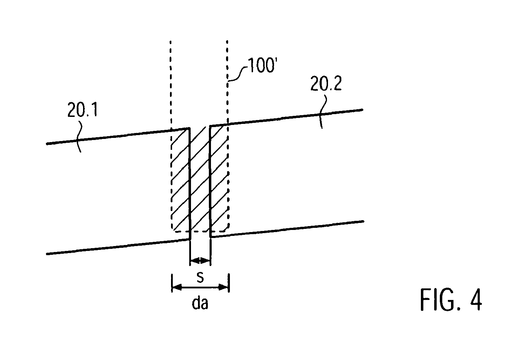

In **Figur 4** ist eine Ansicht eines Schweißvorgangs beim erfindungsgemäßen Ausführungsbeispiel zum spaltbehafteten Tiefschweißverfahren ähnlich Figur 3 dargestellt. Hierbei ist zwischen den Werkstücken 20.1 und 20.2 ein Spalt mit einer Breite S ausgebildet. Der modifizierte Laserstrahl 100' mit der ringförmigen Intensitätsverteilung weist einen Außendurchmesser da auf, der breiter ist als der Spalt S. Beim Schweißvorgang wirkt dieser Ringfokus nun auf die Randbereiche der Werkstücke 20.1 und 20.2 und schmilzt diese auf und bildet dabei ein Schmelzbad, das gestrichelt dargestellt ist. Auf diese Weise fließt auch bei spaltbehafteten Schweißnähten zwischen dem Werkstück 20.1 und 20.2 das Schmelzbad über dem Spalt zusammen, ohne dass es zu Druchbrüchen kommt. Die Einkopplungseffizienz ist bei Verwendung eines ringförmigen modifizerten Laserstrahls 100' dennnoch sehr hoch, da die Randbereiche durch den Ringfokus originär aufgeschmolzen werden und im Schmelzbad zusammenfließen. Auf diese Weise ist es vorteilhaft möglich, auch spaltbehaftete Strukturen im Tiefschweißverfahren zu verschweißen. Beim Tiefschweißverfahren nach Figur 4 genauso wie nach Figur 3 ist auch eine geringfügige Dejustage des transformierten Laserstrahls 100' auf den Fügespalt zwischen den Werkstücken 20.1 und 20.2 unschädlich, da durch die Breite da selbst bei leichtem Versetzten des modifizierten Laserstrahls 100' nach links oder nach rechts immer noch über weite Teile auch ein Randbereich des benachbarten Werkstücks 20.1 bzw. 20.2 vom Ringfokus erfasst und damit aufgeschmolzen wird. Bei einem herkömmlich fokussierten Laserstrahl würde eine solche Dejustage schnell dazu führen, dass lediglich ein Werkstück aufgeschmolzen wird und damit eine Schweißnaht nicht mehr ausgebildet werden kann.

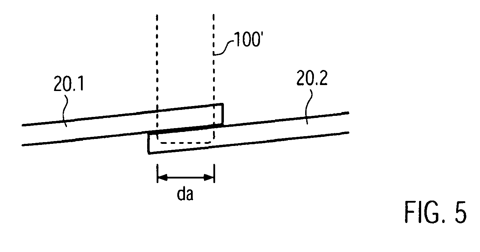

In **Figur 5** ist eine Ansicht eines Schweißbereichs beim erfindungsgemäßen Ausführungsbeispiel zum Überlappschweißverfahren dargestellt. Der modifizierte Laserstrahl 100' wird auf zwei überlappend angeordnete Werstücke 20.1 und 20.2 ausgerichtet. Da der Laserstrahl eine verhältnismäßig große Breite da aufweist, kann der Energieeintrag über eine breite Fläche bzw. breite Naht in das Material der Werkstücke 20.1 und 20.2 eingebracht werden. Auf diese Weise ist es möglich, dass die Dynamik in dem aufgeschmolzenen Bereich vermindert wird und dadurch die Oberraupe der ausgebildeten Schweißnaht gegenüber herkömmlichen Verfahren verbessert wird. Durch den Energieeintrag über eine breitere Fläche ist es auch möglich, etwaige Durchbrüche zu vermeiden, die mit fokussierten Gaußstrahlen auftreten würden.

### Bezugszeichenliste

- 10: Laser, insbesondere CO2-Laser
- 11: Resonator
- 20: Werkstück
- 30: optisches Element
- 35: Quotienten-Einstelleinrichtung
- 50: Laserbearbeitungsdüse
- 60: Fokussieroptik
- 100: Laserstrahl
- 100': transformierter Laserstrahl

## Patentansprüche

1. Vorrichtung zur Laserbearbeitung umfassend einen Laser (10) mit einem Resonator, der eingerichtet ist, einen Laserstrahl (100) mit einer vorbestimmten Kaustik zu erzeugen
ein optisches Element (30) zur Transformation des Laserstrahls (100) in einen Strahl (100') mit ringförmiger Intensitätsverteilung entlang eines Bereichs der Kaustik des Laserstrahls (100'), wobei
die ringförmige Intensitätsverteilung im Bereich des kleinsten Durchmessers der Kaustik entlang der Propagationsrichtung des Strahls (100') in einer Ebene senkrecht zur Propagationsrichtung des Strahls (100') einen nach der 2.-Momente-Methode bestimmten Strahlradius (SR) und eine bei einer Intensität von 50% der Maximalintensität in radialer Richtung bestimmte Ringbreite (RB) aufweist, wobei
der Quotient (Q) aus der Ringbreite (RB) und dem Strahlradius (SR) kleiner als 0,6, bevorzugt kleiner als 0,5 ist und **dadurch gekennzeichnet, dass** das optische Element eine Vortex-Struktur aufweist.

2. Vorrichtung zur Laserbearbeitung nach Anspruch 1, wobei der Quotient (Q) aus radialer Ringbreite (RB) und Strahlradius (RR)
über einen Bereich von mindestens n mal der Rayleighlänge (zR) vor und hinter dem Bereich des kleinsten Durchmessers der Kaustik entlang der Propagationsrichtung des Strahls (100') unter einer Abweichung von weniger als 10 % weiterhin erhalten bleibt, wobei n gleich 5, bevorzugt gleich 10, insbesondere bevorzugt gleich 50 ist.

3. Vorrichtung zur Laserbearbeitung nach einem der vorhergehenden Ansprüche, wobei der Bereich des kleinsten Durchmessers der Kaustik entlang der Propagationsrichtung der durch eine Fokussieroptik (60) erzeugte Fokus ist.

4. Vorrichtung zur Laserbearbeitung nach einem der vorhergehenden Ansprüche, wobei das optische Element (30) eine Quotienten-Einstelleinrichtung (35) zur Einstellung des Quotienten (Q) aus radialer Ringbreite (RB) und Strahlradius (SR) aufweist.

5. Vorrichtung zur Laserbearbeitung nach einem der vorhergehenden Ansprüche, wobei das optische Element (30) ausserhalb des Resonators angeordnet ist.

6. Vorrichtung zur Laserbearbeitung nach einem der vorhergehenden Ansprüche, wobei der Wert des Strahlradius (SR) einstellbar ist.

7. Vorrichtung zur Laserbearbeitung nach einem der vorhergehenden Ansprüche, wobei das optische Element (30) eine reflektive Optik ist und die reflektive Optik eine Geometrie zur Korrektur von Abbildungsfehlern aufweist.

8. Vorrichtung zur Laserbearbeitung nach einem der vorhergehenden Ansprüche, wobei
das optische Element einen Metallspiegel, insbesondere einen Cu-Spiegel umfasst.

9. Verfahren zur Bearbeitung eines Werkstücks (20) mittels eines Laserstrahls (100'), umfassend die Schritte:
Erzeugen eines Laserstrahls (100') mit einer ringförmigen Intensitätsverteilung entlang eines Bereichs der Kaustik des Laserstrahls (100'), wobei
die ringförmige Intensitätsverteilung im Bereich des kleinsten Durchmessers der Kaustik entlang der Propagationsrichtung des Strahls (100') in einer Ebene senkrecht zur Propagationsrichtung des Strahls (100') einen nach der 2.-Momente-Methode bestimmten Strahlradius (SR) und eine bei einer Intensität von 50% der Maximalintensität in radialer Richtung bestimmte Ringbreite (RB) aufweist, wobei der Quotient (Q) aus der Ringbreite (RB) und dem Strahlradius (SR) kleiner als 0,6, bevorzugt kleiner als 0,5 ist und **dadurch gekennzeichnet, dass** die Einstellung des Quotienten durch Verwendung einer Vortexgeometrie erfolgt.

10. Verfahren nach Anspruch 9, wobei
der Quotient (Q) aus radialer Ringbreite (RB) und Strahlradius (SR)
über einen Bereich von mindestens n mal der Rayleighlänge zR vor und hinter dem Bereich des kleinsten Durchmessers der Kaustik entlang der Propagationsrichtung des Strahls (100') unter einer Abweichung von weniger als 10 % weiterhin erhalten bleibt, wobei n gleich 5, bevorzugt gleich 10, insbesondere bevorzugt gleich 50 ist.

11. Verfahren nach einem der Ansprüche 9 oder 10, wobei die Bearbeitung eines Werkstücks (20) mittels eines Laserstrahls (100) Schweißen, Schneiden, Schmelzen, Erwärmen, Abtragen, Markieren, thermisches Fügen oder eine Kombination hiervon umfasst.

12. Verfahren nach einem der Ansprüche 9 bis 11, wobei ein erstes Werkstück (20.1) und ein zweites Werkstück (20.2) im Tiefschweißverfahren miteinander verschweißt werden und der Laserstrahl (100') einen Quotienten von weniger als 0,6, bevorzugt von weniger als 0,5, besonders bevorzugt von weniger als 0,4 aufweist.

13. Verfahren nach einem der Ansprüche 9 bis 11, wobei ein erstes Werkstück (20.1) und/ oder ein zweites Werkstück (20.2) eine beschichtete Oberfläche aus einem Material mit hoher Abdampfrate aufweist, wobei der Laserstrahl (100') einen Quotienten von weniger als 0,6, bevorzugt von weniger als 0,5, besonders bevorzugt von weniger als 0,4 aufweist.

14. Verfahren nach einem der Ansprüche 9 bis 11, wobei ein erstes Werkstück (20.1) und/ oder ein zweites Werkstück (20.2) aus Aluminium oder einer Aluminiumlegierung besteht, wobei der Laserstrahl (100') einen Quotienten von weniger als 0,6, bevorzugt von weniger als 0,5, besonders bevorzugt von weniger als 0,4 aufweist.

15. Verfahren nach einem der Ansprüche 9 bis 14, wobei als ein Schutzgas Argon, N2, CO2 oder eine Kombination hiervon eingesetzt wird.

## Claims

1. Device for laser processing, comprising
a laser (10) having a resonator (11) that is equipped to generate a laser beam (100) with a predetermined caustic
an optical element (30) for transforming the laser beam (100) into a beam (100') having an annular intensity distribution along an area of the caustic of the laser beam (100'), wherein
the annular intensity distribution in the area of the smallest diameter of the caustic along the propagation direction of the beam (100') in a plane that is perpendicular to the propagation direction of the beam (100') has a beam radius (SR) that is determined according to the 2^{nd} moment method and a ring width (RB) determined at an intensity of 50% of the maximum intensity in the radial direction,
wherein
the quotient (Q) of the ring width (RB) and of the beam radius (SR) is less than 0.6, preferably less than 0.5 and **characterized in that** the optical element has a vortex structure.

2. Device for laser processing according to claim 1,
wherein the quotient (Q) of radial ring width (RB) and beam radius (SR) continues to be preserved over an area of at least n times the Rayleigh length (zR) in front of and behind the area of the smallest diameter of the caustic along the propagation direction of the beam (100') deviating by less than 10%, wherein n is equal to 5, preferably equal to 10, particularly preferably equal to 50.

3. Device for laser processing according to one of the previous claims, wherein the area of the smallest diameter of the caustic along the propagation direction is the focus produced by a focussing lens system (60).

4. Device for laser processing according to one of the previous claims, wherein the optical element (30) has a quotient-adjustment device (35) for adjusting the quotient (Q) of radial ring width (RB) and beam radius (SR).

5. Device for laser processing according to one of the previous claims, wherein the optical element (30) is arranged outside the resonator (11).

6. Device for laser processing according to one of the previous claims, wherein the value of the beam radius (SR) is adjustable.

7. Device for laser processing according to one of the previous claims, wherein the optical element (30) is a reflective lens system and the reflective lens system has a geometry for correcting imaging errors.

8. Device for laser processing according to one of the previous claims, wherein the optical element comprises a metal mirror, in particular a Cu mirror.

9. Method for processing a workpiece (20) by means of a laser beam (100'), comprising the steps:
generating a laser beam (100') with an annular intensity distribution along an area of the caustic of the laser beam (100'), wherein
the annular intensity distribution in the area of the smallest diameter of the caustic along the propagation direction of the beam (100') in a plane that is perpendicular to the propagation direction of the beam (100') has a beam radius (SR) determined according to the 2^{nd} moment method and a ring width (RB) determined at an intensity of 50% of the maximum intensity in radial direction, wherein the quotient (Q) of the ring width (RB) and the beam radius (SR) is smaller than 0.6, preferably smaller than 0.5 and **characterized in that** the quotient is adjusted by using a vortex geometry.

10. Method according to claim 9, wherein the quotient (Q) of radial ring width (RB) and beam radius (SR) continues to be preserved over an area of at least n times the Rayleigh length zR in front of and behind the area of the smallest diameter of the caustic along the propagation direction of the beam (100') deviating by less than 10%, wherein n is equal to 5, preferably equal to 10, particularly preferably equal to 50.

11. Method according to one of claims 9 and 10, wherein the processing of a workpiece (20) by means of a laser beam (100) comprises welding, cutting, melting, heating, erosion, marking, thermal joining or a combination thereof.

12. Method according to one of claims 9 to 11, wherein a first workpiece (20.1) and a second workpiece (20.2) are welded together in the deep-penetration welding process and the laser beam (100') has a quotient of less than 0.6, preferably of less than 0.5, particularly preferably of less than 0.4.

13. Method according to one of claims 9 to 11, wherein a first workpiece (20.1) and/or a second workpiece (20.2) have/has a coated surface made of a material with a high evaporation rate, wherein the laser beam (100') has a quotient of less than 0.6, preferably of less than 0.5, particularly preferably of less than 0.4.

14. Method according to one of claims 9 to 11, wherein a first workpiece (20.1) and/or a second workpiece (20.2) consist/consists of aluminium or an aluminium alloy, wherein the laser beam (100') has a quotient of less than 0.6, preferably of less than 0.5, particularly preferably of less than 0.4.

15. Method according to one of claims 9 to 14, wherein argon, N2, CO2 or a combination thereof is used as a protective gas.

## Revendications

1. Dispositif d'usinage au laser comprenant un laser (10) pourvu d'un résonateur conçu pour produire un rayon laser (100) avec un caustique prédéterminé ;
un élément optique (30) permettant de transformer le rayon laser (100) en un rayon (100') avec une répartition d'intensité de forme annulaire le long d'une région du caustique du rayon laser (100') ;
la répartition d'intensité de forme annulaire dans la région de plus petit diamètre du caustique le long de la direction de propagation du rayon (100') comprenant, dans un plan perpendiculaire à la direction de propagation du rayon (100'), un rayon de rayon (SR) défini selon la méthode du second moment et une largeur annulaire (RB) définie à une intensité de 50 % de l'intensité maximale dans la direction radiale ;
le quotient (Q) de la largeur annulaire (RB) sur le rayon de rayon (SR) étant inférieur à 0,6, de façon préférée inférieur à 0,5, et **caractérisé en ce que** l'élément optique comporte une structure en vortex.

2. Dispositif d'usinage au laser selon la revendication 1, le quotient (Q) de la largeur annulaire radiale (RB) sur le rayon de rayon (RR) dans une région d'au moins n fois la longueur de Rayleigh (zR) restant, devant et derrière la région de plus petit diamètre du caustique le long de la direction de propagation du rayon (100'), inférieur à un écart de 10 %, n étant égal à 5, étant de façon préférée égal à 10 et étant égal de façon particulièrement préférée à 50.

3. Dispositif d'usinage au laser selon l'une quelconque des revendications précédentes, la région de plus petit diamètre du caustique le long de la direction de propagation étant le foyer produit par un système optique de focalisation (60).

4. Dispositif d'usinage au laser selon l'une quelconque des revendications précédentes, l'élément optique (30) comportant un dispositif de réglage de quotient (35) permettant de régler le quotient (Q) de la largeur annulaire radiale (RB) sur le rayon de rayon (SR).

5. Dispositif d'usinage au laser selon l'une quelconque des revendications précédentes, l'élément optique (30) étant disposé à l'extérieur du résonateur.

6. Dispositif d'usinage au laser selon l'une quelconque des revendications précédentes, la valeur du rayon de rayon (SR) étant réglable.

7. Dispositif d'usinage au laser selon l'une quelconque des revendications précédentes, l'élément optique (30) étant un système optique réflectif, le système optique réflectif comportant une géométrie permettant de corriger les anomalies de déformation.

8. Dispositif d'usinage au laser selon l'une quelconque des revendications précédentes, l'élément optique comportant un miroir métallique, notamment un miroir au Cu.

9. Procédé d'usinage d'une pièce usinée (20) à l'aide d'un rayon laser (100'), comprenant les étapes consistant à :
produire un rayon laser (100') avec une répartition d'intensité de forme annulaire le long d'une région du caustique du rayon laser (100') ;
la répartition d'intensité de forme annulaire comportant, dans la région de plus petit diamètre du caustique le long de la direction de propagation du rayon (100'), dans un plan perpendiculaire à la direction de propagation du rayon (100'), un rayon de rayon (SR) défini selon la méthode du second moment et une largeur annulaire (RB) définie à une intensité de 50 % de l'intensité maximale dans la direction radiale, le quotient (Q) de la largeur annulaire (RB) sur le rayon de rayon (SR) étant inférieur à 0,6, de façon préférée inférieur à 0,5 et **caractérisé en ce que** le réglage du quotient est réalisé en utilisant une forme géométrique de vortex.

10. Procédé selon la revendication 9, le quotient (Q) de la largeur annulaire radiale (RB) et du rayon de rayon (SR) dans une région d'au moins n fois la longueur de Rayleigh zR restant, devant et derrière la région de plus petit diamètre du caustique le long de la direction de propagation du rayon (100'), inférieur à un écart de 10 %, n étant égal à 5, étant de façon préférée égal à 10, étant de façon particulièrement préférée égal à 50.

11. Procédé selon l'une quelconque des revendications 9 ou 10, l'usinage d'une pièce usinée (20) au moyen d'un rayon laser (100) comprenant la soudure, la coupe, la fonte, le chauffage, le retrait, le marquage, le jointement thermique ou une combinaison de ceux-ci.

12. Procédé selon l'une quelconque des revendications 9 à 11, une première pièce usinée (20.1) et une deuxième pièce usinée (20.2) étant soudées entre elles par le biais d'un procédé de soudage en profondeur et le rayon laser (100') présentant un quotient inférieur à 0,6, de façon préférée inférieur à 0,5, de façon particulièrement préférée inférieur à 0,4.

13. Procédé selon l'une quelconque des revendications 9 à 11, une première pièce usinée (20.1) et/ou une deuxième pièce usinée (20.2) comportant une surface revêtue d'une matière à vitesse d'évaporation élevée, le rayon laser (100') présentant un quotient inférieur à 0,6, de façon préférée inférieur à 0,5, de façon particulièrement préférée inférieur à 0,4.

14. Procédé selon l'une quelconque des revendications 9 à 11, une première pièce usinée (20.1) et/ou une deuxième pièce usinée (20.2) se composant d'aluminium ou d'un alliage d'aluminium, le rayon laser (100') présentant un quotient inférieur à 0,6, de façon préférée inférieur à 0,5, de façon particulièrement préférée inférieur à 0,4.

15. Procédé selon l'une quelconque des revendications 9 à 14, le gaz de protection utilisé étant de l'argon, du N2, du CO2 ou une combinaison de ceux-ci.
